# EUROPEAN PATENT SPECIFICATION

(11) **EP 4 387 315 B1**
(45) Date of publication and mention of the grant of the patent: **26.11.2025**
(21) Application number: 22866322.5
(22) Date of filing: 11.08.2022
(51) Int. Cl.: H04W 24/02, H04W 74/08

(54) **MEDIUM SYNCHRONIZATION DELAY TIMER SETTING METHOD AND RELATED APPARATUS**
VERFAHREN ZUR EINSTELLUNG EINES MEDIUMSYNCHRONISATIONSVERZÖGERUNGSTIMERS UND ZUGEHÖRIGE VORRICHTUNG
PROCÉDÉ DE RÉGLAGE DE TEMPORISATEUR DE SYNCHRONISATION DE SUPPORT, ET APPAREIL ASSOCIÉ

(30) Priority: 08.09.2021 CN 202111052538
(43) Date of publication of application: 19.06.2024
(73) Proprietor: Huawei Technologies Co., Ltd., Shenzhen, Guangdong 518129 (CN)
(72) Inventor: LI, Yunbo, Shenzhen, Guangdong 518129 (CN); GUO, Yuchen, Shenzhen, Guangdong 518129 (CN); GAN, Ming, Shenzhen, Guangdong 518129 (CN)
(74) Representative: Körber, Martin Hans
(86) International application number: PCT/CN2022/111750
(87) International publication number: WO 2023/035848

(56) References cited:
- CN-A- 112 714 472
- CN-A- 113 068 214
- US-A1- 2021 266 891
- DIBAKAR DAS (INTEL): "PDT-MAC-MLO-NSTR-blindness-TBD", vol. 802.11 EHT; 802.11be, 8 February 2021 (2021-02-08), pages 1 - 5, XP068176178, Retrieved from the Internet <URL:https://mentor.ieee.org/802.11/dcn/21/11-21-0221-00-00be-pdt-mac-mlo-nstr-blindness-tbd.docx> [retrieved on 20210208]
- DIBAKAR DAS (INTEL): "PDT-MAC-MLO-NSTR-blindness-TBD", IEEE DRAFT; 11-21-0221-00-00BE-PDT-MAC-MLO-NSTR-BLINDNESS-TBD, IEEE-SA MENTOR, PISCATAWAY, NJ USA, vol. 802.11 EHT; 802.11be, no. 0, 8 February 2021 (2021-02-08), Piscataway, NJ USA , pages 1 - 5, XP068176178

## Description

This application claims priority to Chinese Patent Application No. 202111052538.3, filed with the China National Intellectual Property Administration on September 8, 2021.

### TECHNICAL FIELD

This application relates to the field of wireless communication technologies, and in particular, to a medium synchronization delay timer setting method and a related apparatus.

### BACKGROUND

A continuous technical goal of development and evolution of a wireless local area network (wireless local area network, WLAN) or a cellular network is to continuously improve a throughput. A protocol of a WLAN system is mainly discussed and researched in the institute of electrical and electronics engineers (institute of electrical and electronics engineers, IEEE) standard group. Based on previous standard protocols such as 802.11a/b/g/n/ac/ax, a next-generation standard 802.11be uses an extremely high throughput (extremely high throughput, EHT) as a technical goal. One of key technologies of 802.11be is to improve the throughput through multi-link (multi-link, ML) communication. A core idea of the multi-link communication is that a WLAN device that supports the next-generation standard 802.11be, that is, an EHT device, has multi-band (multi-band) transmitting and receiving capabilities, and therefore uses a larger bandwidth for data transmission, to significantly improve the throughput. A multi-band includes but is not limited to a 2.4 GHz Wi-Fi frequency band, a 5 GHz Wi-Fi frequency band, and a 6 GHz Wi-Fi frequency band. In 802.11be, a WLAN device that supports the multi-link communication is referred to as a multi-link device (Multi-link device, MLD). Clearly, the multi-link device may perform parallel communication by using a plurality of links (or a plurality of frequency bands), so that a transmission rate is greatly improved.

When a frequency spacing between the plurality of frequency bands supported by the multi-link device (MLD) is small, sending of a signal in one frequency band affects receiving of a signal in another frequency band. For example, the multi-link device sends a signal on a link 1. Because a frequency spacing between the link 1 and a link 2 is small, the signal sent on the link 1 causes channel interference to the link 2, and affects channel access and information receiving on the link 2. Therefore, to avoid mutual interference, the device cannot independently perform sending and receiving operations in the plurality of frequency bands at the same time. According to the current progress of the 802.11 TGbe standard group, it is defined that the multi-link device may have a simultaneous transmitting and receiving (Simultaneous transmitting and receiving, STR) capability and a non-simultaneous transmitting and receiving (Non-Simultaneous transmitting and receiving, NSTR) capability. For an MLD, its two links with the STR capability are referred to as an STR link pair, and its two links without the STR capability are referred to as an NSTR link pair.

For an NSTR link pair, due to a problem of signal interference between links, when a signal is sent on one link (for example, the link 1), a signal may not be received on the other link (for example, the link 2). In this case, if a data packet needs to be received on the link 2, the data packet may not be received, resulting in a packet loss. Consequently, network allocation vector (network allocation vector, NAV) update is missed. In this case, if a station on the link 2 directly participates in channel contention (for example, enhanced distributed channel access (enhanced distributed channel access, EDCA) contention), a fairness problem is caused to another station. This technical problem needs to be resolved urgently. Document Dibakar Das (Intel): "PDT-MAC-MLO-NSTR-blindness-TBD",IEEE Draft; 11-21-0221-00-00be-pdt-mac-mlo-nstr-blindness-tbd, IEEE-SA mentor, Piscataway, NJ USA, vol. 802.11 EHT; 802.11be, no. 0, 8 February 2021 (2021-02-08), pages 1-5, XP068176178,Piscataway, NJ USA represents the closest prior art.

### SUMMARY

Embodiments of this application provide a medium synchronization delay timer setting method and a related apparatus, to properly set a value of a medium synchronization delay timer. In this way, a fairness problem caused to another station because a station that has lost medium synchronization (lost medium synchronization) participates in channel contention can be resolved, and impact of an unnecessary limitation on station performance can be reduced, in other words, the station performance can be improved.

The following describes this application from different aspects. It should be understood that mutual reference may be made to the following implementations and beneficial effects of the different aspects.

According to a first aspect, this application provides a medium synchronization delay timer setting method. The method includes: When transmission of a second station in a non-access point station (non-access point station, non-AP STA) multi-link device non-AP MLD ends, a first station in the non-AP MLD starts a medium synchronization delay (MediumSyncDelay) timer and sets an initial value. The first station in the non-AP MLD receives a physical layer protocol data unit (physical layer Protocol Data Unit, PPDU) carrying a medium access control protocol data unit (Medium Access Control Protocol Data Unit, MPDU), where the MPDU includes a request to send (request to send, RTS) frame. If the RTS frame is sent by a first access point, and a link on which the first access point operates does not belong to any NSTR link pair of an AP MLD with which the first access point is affiliated, the first station in the non-AP MLD resets a count value of the medium synchronization delay timer to 0. A link pair formed by a link on which the first station operates and a link on which the second station operates is an NSTR link pair, in other words, the first station and the second station in the non-AP MLD have an NSTR capability. The first access point may be an access point associated with the first station, or the first access point may be another access point in a multiple (multiple) basic service set identifier (basic service set identifier, BSSID) in which the access point associated with the first station is located. It should be understood that the first station herein may be referred to as a station that has lost medium synchronization or a station in a blind state.

Optionally, the initial value is set by an AP, or is a default value specified in a standard.

It can be learned that in this solution, after receiving an RTS frame, the first station determines, by determining whether a link on which a sending station of the RTS frame operates belongs to an NSTR link pair, whether the count value of the MediumSyncDelay timer needs to be set to 0, and may perform different processing on the MediumSyncDelay timer based on different sending stations of RTS frames. Through implementation of this technical solution, a fairness problem caused to another station because the station that has lost medium synchronization participates in channel contention can be resolved, and therefore a probability of collision is reduced and fairness of the channel contention is improved. In addition, impact of an unnecessary limitation on station performance can be reduced, in other words, the station performance can be improved.

With reference to the first aspect, in a possible implementation, as defined in the existing 802.11be standard, only when an AP MLD is a mobile AP MLD (Mobile AP MLD), a link pair of the AP MLD may be an NSTR link pair. Otherwise, all link pairs of the AP MLD need to be STR link pairs. The NSTR mobile AP MLD has only two links, and the only two links are NSTR links. Therefore, that a link on which the first access point operates does not belong to any NSTR link pair of an AP MLD with which the first access point is affiliated may also be understood as that the AP MLD with which the first access point is affiliated is not an NSTR mobile AP MLD, and any two links included in the NSTR mobile AP MLD are NSTR links.

Optionally, the method further includes: If the RTS frame is sent by the first access point, and the AP MLD with which the first access point is affiliated is an NSTR mobile AP MLD, the first station in the non-AP MLD does not reset the count value of the medium synchronization delay timer to 0.

It can be learned that this solution provides a medium synchronization delay timer setting method that is compatible with the existing 802.11be standard.

With reference to the first aspect, in a possible implementation, the method further includes: If the RTS frame is sent by the first access point, and the link on which the first access point operates belongs to any NSTR link pair of the AP MLD with which the first access point is affiliated, the first station in the non-AP MLD does not reset the count value of the medium synchronization delay timer to 0.

It can be learned that in this solution, it is restricted that when the sending station of the RTS frame is in the blind state or has lost medium synchronization, the MediumSyncDelay timer is not allowed to be reset to 0. In this way, the fairness problem caused to the another station because the station that has lost medium synchronization directly participates in channel contention can be avoided, and therefore the probability of collision is reduced and the fairness of the channel contention is improved.

According to a second aspect, this application provides a communication apparatus. The communication apparatus may be a non-AP MLD or a chip in the non-AP MLD, for example, a Wi-Fi chip. The communication apparatus includes: a processing unit, configured to: when transmission of a second station in the non-AP MLD ends, start a medium synchronization delay timer and set an initial value, where a link pair formed by a link on which the communication apparatus operates and a link on which the second station operates is an NSTR link pair; and a transceiver unit, configured to receive a PPDU, where the PPDU carries an MPDU, and the MPDU includes an RTS frame, where the processing unit is further configured to: when the RTS frame is sent by a first access point, and a link on which the first access point operates does not belong to any NSTR link pair of an AP MLD with which the first access point is affiliated, reset a count value of the medium synchronization delay timer to 0. The first access point is an access point associated with the communication apparatus, or the first access point is another access point in a multiple BSSID in which the access point associated with the communication apparatus is located.

Optionally, the initial value is set by an AP, or is a default value specified in a standard.

With reference to the second aspect, in a possible implementation, that a link on which the first access point operates does not belong to any NSTR link pair of an AP MLD with which the first access point is affiliated may also be understood as that the AP MLD with which the first access point is affiliated is not an NSTR mobile AP MLD, and any two links included in the NSTR mobile AP MLD are NSTR links.

Optionally, the processing unit is further configured to: when the RTS frame is sent by the first access point, and the AP MLD with which the first access point is affiliated is the NSTR mobile AP MLD, skip resetting the count value of the medium synchronization delay timer to 0.

With reference to the second aspect, in a possible implementation, the processing unit is further configured to: when the RTS frame is sent by the first access point, and the link on which the first access point operates belongs to any NSTR link pair of the AP MLD with which the first access point is affiliated, skip resetting the count value of the medium synchronization delay timer to 0.

According to a third aspect, this application provides a medium synchronization delay timer setting method. The method includes: When transmission of a second access point in an AP MLD ends, a first access point in the AP MLD starts a medium synchronization delay timer and sets an initial value. The first access point in the AP MLD receives a PPDU carrying an MPDU, and the MPDU includes an RTS frame. If the RTS frame is sent by a first station associated with the first access point, and a link on which the first station operates does not belong to any NSTR link pair of a non-AP MLD with which the first station is affiliated, the first access point in the AP MLD resets a count value of the medium synchronization delay timer to 0. A link pair formed by a link on which the first access point operates and a link on which the second access point operates is an NSTR link pair, in other words, the first access point and the second access point in the AP MLD have an NSTR capability. The AP MLD herein may be an NSTR mobile AP MLD. At least one link pair in a link pair of the NSTR mobile AP MLD is an NSTR link pair. It should be understood that the first access point herein may be referred to as an AP that has lost medium synchronization or an AP in a blind state.

Optionally, the initial value is set by an AP, or is a default value specified in a standard.

It can be learned that, in this solution, a method for setting a MediumSyncDelay timer on a station side is extended to an AP side. When the first access point has lost medium synchronization, and an RTS frame received by the first access point is from a station that is not in the blind state or has not lost medium synchronization, the MediumSyncDelay timer is reset to 0. Through implementation of this technical solution, a fairness problem caused to another station because the AP side directly participates in channel contention due to a medium synchronization loss can be resolved, and therefore a probability of collision is reduced and fairness of the channel contention is improved. In addition, impact of an unnecessary limitation on performance of the AP can be reduced, in other words, the performance can be improved.

With reference to the third aspect, in a possible implementation, the method further includes: If the RTS frame is sent by the first station associated with the first access point, and the link on which the first station operates belongs to an NSTR link pair of the non-AP MLD with which the first station is affiliated, the first access point in the AP MLD does not reset the count value of the medium synchronization delay timer to 0.

According to a fourth aspect, this application provides a communication apparatus. The communication apparatus may be an AP MLD or a chip in the AP MLD, for example, a Wi-Fi chip. The communication apparatus includes: a processing unit, configured to: when transmission of a second access point in the AP MLD ends, start a medium synchronization delay timer and set an initial value, where a link pair formed by a link on which the communication apparatus operates and a link on which the second access point operates is an NSTR link pair; and a transceiver unit, configured to receive a PPDU, where the PPDU carries an MPDU, and the MPDU includes an RTS frame, where the processing unit is further configured to: when the RTS frame is sent by a first station associated with the communication apparatus, and a link on which the first station operates does not belong to any NSTR link pair of a non-AP MLD with which the first station is affiliated, reset a count value of the medium synchronization delay timer to 0.

Optionally, the initial value is set by an AP, or is a default value specified in a standard.

With reference to the fourth aspect, in a possible implementation, the processing unit is further configured to: when the RTS frame is sent by the first station associated with the communication apparatus, and the link on which the first station operates belongs to an NSTR link pair of the non-AP MLD with which the first station is affiliated, skip resetting the count value of the medium synchronization delay timer to 0.

According to a fifth aspect, this application provides a communication apparatus. The apparatus is specifically a non-AP MLD, and includes a processor and a transceiver. The processor is configured to: when transmission of a second station in the non-AP MLD ends, start a medium synchronization delay timer and set an initial value, where a link pair formed by a link on which the communication apparatus operates and a link on which the second station operates is a non-simultaneous transmitting and receiving NSTR link pair. The transceiver is configured to receive a PPDU, where the PPDU carries an MPDU, and the MPDU includes an RTS frame. The processor is further configured to: when the RTS frame is sent by a first access point, and a link on which the first access point operates does not belong to any NSTR link pair of an access point multi-link device AP MLD with which the first access point is affiliated, reset a count value of the medium synchronization delay timer to 0. The first access point is an access point associated with the communication apparatus, or the first access point is another access point in a multiple BSSID in which the access point associated with the communication apparatus is located.

According to a sixth aspect, this application provides a communication apparatus. The apparatus is specifically an AP MLD, and includes a processor and a transceiver. The processor is configured to: when transmission of a second access point in the AP MLD ends, start a medium synchronization delay timer and set an initial value, where a link pair formed by a link on which the communication apparatus operates and a link on which the second access point operates is an NSTR link pair. The transceiver is configured to receive a PPDU, where the PPDU carries an MPDU, and the MPDU includes an RTS frame. The processor is further configured to: when the RTS frame is sent by a first station associated with the communication apparatus, and a link on which the first station operates does not belong to any NSTR link pair of a non-AP MLD with which the first station is affiliated, reset a count value of the medium synchronization delay timer to 0.

According to a seventh aspect, this application provides an apparatus. The apparatus is implemented in a product form of a chip, and includes an input/output interface and a processing circuit. The apparatus is a chip in a non-AP MLD. The processing circuit is configured to: when transmission of a second station in the non-AP MLD ends, start a medium synchronization delay timer and set an initial value, where a link pair formed by a link on which a first station operates and a link on which the second station operates is a non-simultaneous transmitting and receiving NSTR link pair. The input/output interface is configured to receive a PPDU through an antenna and a radio frequency circuit, where the PPDU carries an MPDU, and the MPDU includes an RTS frame. The processing circuit is further configured to: when the RTS frame is sent by a first access point, and a link on which the first access point operates does not belong to any NSTR link pair of an AP MLD with which the first access point is affiliated, reset a count value of the medium synchronization delay timer to 0. The first access point is an access point associated with the first station, or the first access point is another access point in a multiple BSSID in which the access point associated with the first station is located.

According to an eighth aspect, this application provides an apparatus. The apparatus is implemented in a product form of a chip, and includes an input/output interface and a processing circuit. The apparatus is a chip in an AP MLD. The processing circuit is configured to: when transmission of a second access point in the AP MLD ends, start a medium synchronization delay timer and set an initial value, where a link pair formed by a link on which a first access point operates and a link on which the second access point operates is an NSTR link pair. The input/output interface is configured to receive a PPDU through an antenna and a radio frequency circuit, where the PPDU carries an MPDU, and the MPDU includes an RTS frame. The processing circuit is further configured to: when the RTS frame is sent by a first station associated with the first access point, and a link on which the first station operates does not belong to any NSTR link pair of a non-AP MLD with which the first station is affiliated, reset a count value of the medium synchronization delay timer to 0.

According to a ninth aspect, this application provides a computer-readable storage medium. The computer-readable storage medium stores program instructions. When the program instructions are run on a computer, the computer is enabled to perform the medium synchronization delay timer setting method according to the first aspect or the third aspect.

According to a tenth aspect, this application provides a computer program product including program instructions. When the computer program product runs on a computer, the computer is enabled to perform the medium synchronization delay timer setting method according to the first aspect or the third aspect.

Through implementation of embodiments of this application, in an aspect, a fairness problem caused to another station because a station that has lost medium synchronization (lost medium synchronization) participates in channel contention can be resolved, and in another aspect, impact of an unnecessary limitation on station performance can be reduced, in other words, the station performance can be improved.

### BRIEF DESCRIPTION OF DRAWINGS

To describe technical solutions of embodiments of this application more clearly, the following briefly describes accompanying drawings for describing embodiments.
FIG. 1 is a schematic diagram of an architecture of a wireless communication system according to an embodiment of this application;
FIG. 2 is a schematic diagram of multi-link communication according to an embodiment of this application;
FIG. 3a is a schematic diagram of a structure of a multi-link device according to an embodiment of this application;
FIG. 3b is a schematic diagram of another structure of a multi-link device according to an embodiment of this application;
FIG. 4 is a schematic flowchart of a medium synchronization delay timer setting method according to an embodiment of this application;
FIG. 5 is another schematic flowchart of a medium synchronization delay timer setting method according to an embodiment of this application;
FIG. 6 is a schematic diagram of a structure of a communication apparatus according to an embodiment of this application; and
FIG. 7 is a schematic diagram of a structure of a communication apparatus 1000 according to an embodiment of this application.

### DESCRIPTION OF EMBODIMENTS

The following clearly and completely describes technical solutions in embodiments of this application with reference to accompanying drawings in embodiments of this application.

In descriptions of this application, unless otherwise specified, "/" means "or". For example, A/B may mean A or B. "And/or" in this specification describes only an association relationship between associated objects and represents that three relationships may exist. For example, A and/or B may represent the following three cases: Only A exists, both A and B exist, and only B exists. In addition, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may represent a, b, c, a and b, a and c, b and c, or a, b, and c. a, b, and c may be singular or plural.

In the descriptions of this application, terms such as "first" and "second" do not limit a quantity and an execution sequence, and the terms such as "first" and "second" do not indicate a definite difference.

In this application, the term "example", "for example", or the like is used to represent giving an example, an illustration, or a description. Any embodiment or design scheme described with "example", "in an example", or "for example" in this application should not be explained as being more preferred or having more advantages than another embodiment or design scheme. Exactly, use of the term "example", "in an example", "for example", or the like is intended to present a related concept in a specific manner.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

In this application, an element represented in a singular form is intended to represent "one or more", but does not represent "one and only one", unless otherwise specified.

For ease of understanding a method provided in embodiments of this application, the following describes a system architecture of the method provided in embodiments of this application. It may be understood that the system architecture described in embodiments of this application is intended to describe the technical solutions in embodiments of this application more clearly, and does not constitute any limitation on the technical solutions provided in embodiments of this application.

In this application, a next-generation 802.11 standard station device that simultaneously supports communication on a plurality of links is referred to as a multi-link device, and an internal entity responsible for any link is referred to as a station (station, STA). If all stations inside an MLD are access points (access points, APs), the MLD may be further referred to as an AP MLD. If all stations inside an MLD are non-access point stations (non-access point stations, non-AP STAs), the MLD may be further referred to as a non-AP MLD. In other words, the multi-link device includes one or more affiliated stations (affiliated STAs). The affiliated station is a logical station and may operate on a link, a frequency band, or a channel. The affiliated station may be an access point (access point, AP) or a non-access point station (non-access point station, non-AP STA). In 802.11be, a multi-link device whose affiliated station is an AP is referred to as an AP multi-link device (AP multi-link device, AP MLD), and a multi-link device whose affiliated station is a non-AP STA is referred to as a non-AP multi-link device (non-AP multi-link device, non-AP MLD).

Optionally, one multi-link device may include a plurality of logical stations, each logical station operates on one link, but a plurality of logical stations are allowed to operate on a same link. During data transmission between an AP MLD and a non-AP MLD, a link identifier may be used to identify a link or a station on a link. Before communication, the AP MLD and the non-AP MLD may first negotiate or communicate for a correspondence between a link identifier and a link or a station on a link. Therefore, during data transmission, the link identifier is carried without a need to transmit a large amount of signaling information to indicate the link or the station on the link. This reduces signaling overheads and improves transmission efficiency.

Optionally, the multi-link device may implement wireless communication in compliance with the IEEE 802.11 series protocols. For example, a station in compliance with the extremely high throughput or a station in compliance with IEEE 802.11be or is compatible with IEEE 802.11be implements communication with another device. Certainly, the another device may be a multi-link device, or may not be a multi-link device.

The technical solutions provided in this application may be applied to a scenario in which one node communicates with one or more nodes, a scenario of single-user uplink/downlink communication, a scenario of multi-user uplink/downlink communication, and a scenario of device-to-device (device-to-device, D2D) communication. In embodiments of this application, the term "communication" may also be described as "data transmission", "information transmission", or "transmission". The term "transmission" may generally refer to sending and receiving.

Any one of the foregoing nodes may be an AP MLD, or may be a non-AP MLD. For example, the scenario may be a scenario in which one AP MLD communicates with one or more non-AP MLDs, a scenario in which one non-AP MLD communicates with one or more AP MLDs, a scenario in which an AP MLD communicates with an AP MLD, or a scenario in which a non-AP MLD communicates with a non-AP MLD. This is not limited in embodiments of this application. Optionally, the foregoing communication scenario may also include a conventional station that supports transmission only on a single link.

Optionally, in any one of the foregoing scenarios, there is at least one node having a non-simultaneous transmitting and receiving capability, that is, having the NSTR capability.

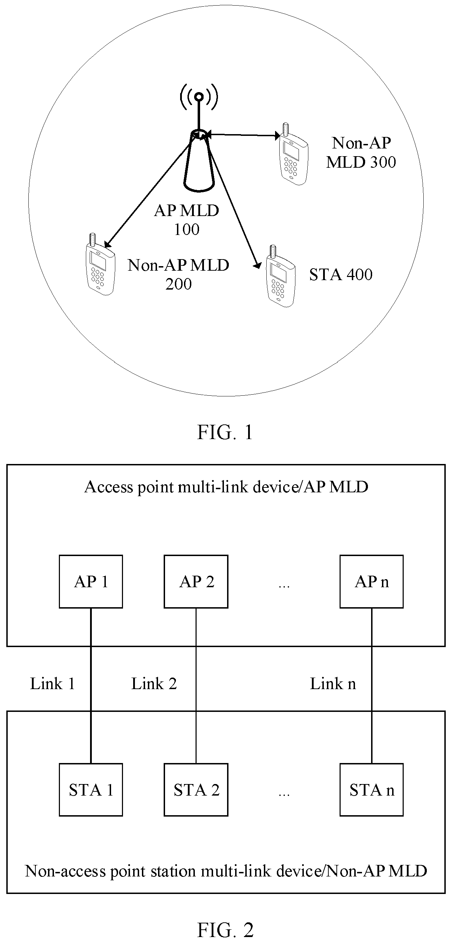

The technical solutions provided in this application are mainly applied to a WLAN. FIG. 1 is a schematic diagram of an architecture of a wireless communication system according to an embodiment of this application. As shown in FIG. 1, the wireless communication system includes at least one AP MLD (for example, an AP MLD 100 in FIG. 1) and at least one non-AP MLD (for example, a non-AP MLD 200 and a non-AP MLD 300 in FIG. 1). Optionally, FIG. 1 further includes a legacy station (for example, a single-link non-AP STA 400 in FIG. 1, which is also referred to as a STA 400) that supports transmission only on a single link. The AP MLD is a device that provides a service for the non-AP MLD, and the non-AP MLD may communicate with the AP MLD on a plurality of links, to improve a throughput. A STA in the non-AP MLD may also communicate with an AP in the AP MLD on a link. It may be understood that quantities of AP MLDs and non-AP MLDs in FIG. 1 are merely an example. Optionally, the wireless communication system includes at least one MLD having an NSTR capability.

Optionally, FIG. 2 is a schematic diagram of multi-link communication according to an embodiment of this application. As shown in FIG. 2, an AP MLD includes n stations, which are separately an AP 1, an AP 2, ..., and an AP n; and a non-AP MLD also includes n stations, which are separately a STA 1, a STA 2, ..., and a STA n. Communication between MLDs is multi-link communication. A link 1 to a link n in FIG. 2 form a multi-link. In other words, the AP MLD and the non-AP MLD may perform parallel communication on the link 1, a link 2, ..., and the link n. An AP in the AP MLD may establish an association relationship with a STA in the non-AP MLD. For example, the STA 1 in the non-AP MLD establishes an association relationship with the AP 1 in the AP MLD, the STA 2 in the non-AP MLD establishes an association relationship with the AP 2 in the AP MLD, and the STA n in the non-AP MLD establishes an association relationship with the AP n in the AP MLD.

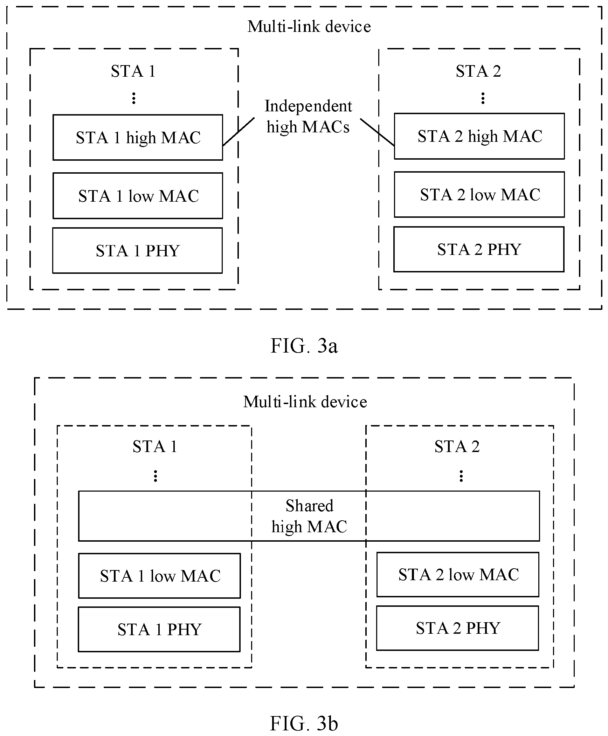

Optionally, FIG. 3a is a schematic diagram of a structure of a multi-link device according to an embodiment of this application. The 802.11 standard focuses on an 802.11 physical layer (physical layer, PHY) part and a medium access control (medium access control, MAC) layer part in a multi-link device. As shown in FIG. 3a, a plurality of STAs included in the multi-link device are independent of each other at a low MAC (low MAC) layer and a PHY layer, and are also independent of each other at a high MAC (high MAC) layer. FIG. 3b is a schematic diagram of another structure of a multi-link device according to an embodiment of this application. As shown in FIG. 3b, a plurality of STAs included in the multi-link device are independent of each other at a low MAC (low MAC) layer and a PHY layer, and share a high MAC (high MAC) layer. Certainly, in a multi-link communication process, a non-AP MLD may use a structure with independent high MAC layers, and an AP MLD may use a structure with a shared high MAC layer. Alternatively, a non-AP MLD may use a structure with a shared high MAC layer, and an AP MLD may use a structure with independent high MAC layers. Alternatively, both a non-AP MLD and an AP MLD may use a structure with a shared high MAC layer. Alternatively, both a non-AP MLD and an AP MLD may use a structure with independent high MAC layers. A schematic diagram of an internal structure of the multi-link device is not limited in embodiments of this application. FIG. 3a and FIG. 3b are merely examples for description. For example, the high MAC layer or the low MAC layer may be implemented by one processor in a chip system of the multi-link device, or may be implemented by different processing modules in a chip system.

For example, the multi-link device in embodiments of this application may be a single-antenna device, or may be a multi-antenna device. For example, the multi-link device may be a device with more than two antennas. A quantity of antennas included in the multi-link device is not limited in embodiments of this application.

For example, the multi-link device (which may be a non-AP MLD or an AP MLD herein) is an apparatus having a wireless communication function. The apparatus may be an integrated device, or may be a chip, a processing system, or the like installed in the integrated device. A device on which the chip or the processing system is installed may implement, under control of the chip or the processing system, the method and functions in embodiments of this application. For example, in embodiments of this application, the non-AP MLD has a wireless transceiver function, may support the 802.11 series protocols, and may communicate with an AP MLD, a single-link device, or another non-AP MLD. For example, the non-AP MLD is any user communication device that allows a user to communicate with an AP and further communicate with a WLAN. For example, the non-AP MLD may be user equipment that can connect to a network, for example, a tablet computer, a desktop computer, a laptop computer, a notebook computer, an ultra-mobile personal computer (ultra-mobile personal computer, UMPC), a handheld computer, a netbook, a personal digital assistant (personal digital assistant, PDA), or a mobile phone, an internet of things node in an internet of things, a vehicle-mounted communication apparatus in an internet of vehicles, or the like. The non-AP MLD may alternatively be a chip and a processing system in the foregoing terminals. The AP MLD may be an apparatus that provides a service for a non-AP MLD, and may support the 802.11 series protocols. For example, the AP MLD may be a communication entity, for example, a communication server, a router, a switch, or a bridge, or the AP MLD may include a macro base station, a micro base station, a relay station, and the like in various forms. Certainly, the AP MLD may alternatively be a chip and a processing system in the devices in the various forms. In this way, the method and functions in embodiments of this application are implemented. An 802.11 protocol may be a protocol that supports 802.11be or is compatible with 802.11be.

It may be understood that the multi-link device may support high-rate and low-latency transmission. With continuous evolution of application scenarios of a wireless local area network, the multi-link device may be further applied to more scenarios, for example, a sensor node (for example, a smart meter, a smart electricity meter, or a smart air detection node) in a smart city, a smart device (for example, a smart camera, a projector, a display, a TV set, a stereo, a refrigerator, or a washing machine) in a smart home, a node in an internet of things, an entertainment terminal (for example, wearable devices such as an AR and a VR), a smart device (for example, a printer or a projector) in a smart office, an internet of vehicles device in an internet of vehicles, and some infrastructures (for example, a vending machine, a self-service navigation station of a supermarket, a self-service cash register device, or a self-service ordering machine) in daily life scenarios. Specific forms of the non-AP MLD and the AP MLD are not limited in embodiments of this application. The foregoing devices are merely examples for description herein.

The foregoing content briefly describes the system structure in embodiments of this application. The following briefly describes a blindness (blindness) problem in a multi-link.

When a station on an NSTR link pair (NSTR link pair) in a non-AP MLD sends a signal, another station on the NSTR link pair may not be able to receive a signal. In this case, 802.11be considers that the station that cannot receive the signal due to uplink interference (due to UL interference) has lost medium synchronization (have lost medium synchronization). In other words, in a sending process on a link (for example, a link 1) of an NSTR MLD, packet receiving cannot be normally performed on another link (for example, a link 2). In this case, a station on the another link is considered to be medium synchronization lost (medium synchronization lost). Briefly, the station on the another link is in a blind (blindness) state. In this case, the station (that is, a station on the link 2) that has lost medium synchronization may miss NAV update. If the station directly participates in EDCA contention, a fairness problem is caused to another station. In other words, EDCA contention of the another station has succeeded, and a period of time (where the period of time is referred to as a transmission opportunity (transmission opportunity, TXOP)) is reserved for communication. However, in the reserved period of time, communication of the another station may be interfered (for example, a collision occurs) by a frame sent by the station (that is, the station on the link 2) that has lost medium synchronization.

It should be understood that the "blind state" mentioned in this application may also be referred to as a "self-interference state", an "unable-to-receive state", a "deaf state", or the like. A "link pair" mentioned in this application may refer to two different links (links) of an MLD. For example, one MLD has three links in total: a link 1, a link 2, and a link 3. The link 1 and the link 2 are a link pair, the link 2 and the link 3 are another link pair, and the link 1 and the link 3 are still another link pair. An "NSTR link pair" mentioned in this application means that an MLD cannot simultaneously perform sending and receiving operations on the link pair, or the MLD has an NSTR capability on the link pair.

It may be understood that an NAV may be understood as a countdown timer and gradually decreases as time elapses. When a countdown is 0, a medium is considered to be in an idle state. Specifically, after a station receives a frame, if a receive address of the frame is not the station, the station may update an NAV based on a duration (duration) field in the received frame. If the receive address of the frame is the station, it indicates that the station is a receive station. In this case, the station cannot update the NAV. Before updating the NAV, the station may further determine whether a value of the duration field in the current frame is greater than a current NAV value of the station. If the value of the duration field in the current frame is greater than the current NAV value of the station, the station updates the NAV. If the value of the duration field in the current frame is less than or equal to the current NAV value of the station, the station does not update the NAV. The NAV value is calculated from an end moment of receiving the frame.

Therefore, to resolve the blind state problem in the multi-link, the 802.11be standard requires the station (for example, the station on the link 2) that has lost medium synchronization to maintain a medium synchronization delay (MediumSyncDelay) timer. When a count value of the timer is not 0, the station that has lost medium synchronization is limited in channel contention. For details, refer to section 35.3.15.7 (medium access recovery procedure, Medium access recovery procedure) in the IEEE 802.11be protocol. A station that has lost medium synchronization due to transmission of another station affiliated with a same MLD needs to start a MediumSyncDelay timer at the end of a transmission event. (A STA that has lost medium synchronization due to transmission by another STA affiliated with the same MLD shall start a MediumSyncDelay timer at the end of that transmission event.) In other words, the MediumSyncDelay timer sets an initial frame at an end moment of a frame sent on the link 1 and starts countdown. An initial value of the MediumSyncDelay timer may be set by an AP, or may be a default value specified in the standard.

When the count value of the MediumSyncDelay timer is not 0, if the station that has lost medium synchronization attempts to contend for a TXOP, a request to send (Request to Send, RTS) frame needs to be used as the initial frame. (A non-AP STA affiliated with non-AP MLD that has a nonzero MediumSyncDelay timer that supports to obtain a TXOP: shall transmit an RTS frame as the first frame of any attempt to obtain a TXOP.)

When the count value of the MediumSyncDelay timer is not 0, if the station that has lost medium synchronization receives a physical layer protocol data unit (physical protocol data unit, PPDU) carrying a valid (valid) medium access control protocol data unit (MAC Protocol Data Unit, MPDU), the MediumSyncDelay timer may be reset (reset) to 0. (The MediumSyncDelay timer resets to zero when any of the following events occur: The STA receives a PPDU with a valid MPDU.) Usually, the valid MPDU carries an NAV, and the station that has lost medium synchronization sets the NAV after receiving the valid MPDU. Therefore, the station that has lost medium synchronization does not directly participate in EDCA contention, but performs EDCA contention after a countdown of the NAV is 0. In this way, no fairness problem is caused to another station, in other words, communication of the another station (on the link 2) is not interfered. Herein, the valid MPDU may mean that the station that has lost medium synchronization can parse the MPDU, and the MPDU has corresponding content.

When the count value of the MediumSyncDelay timer is 0, the station that has lost medium synchronization may normally perform channel contention, in other words, is not limited in channel contention.

It should be understood that when a station (for example, a station 1) on a same NSTR link pair (NSTR link pair) sends a signal, another station (that is, a station that has lost medium synchronization, for example, a station 2) cannot normally perform receiving. However, after the station 1 on the NSTR link pair completes sending, the station 2 may normally perform receiving (because there is no interference from the station 1 to the station 2 in this case). In other words, the station that has lost medium synchronization may receive a physical layer protocol data unit (physical protocol data unit, PPDU) after starting the MediumSyncDelay timer.

Because an RTS frame is also a valid MPDU, according to the current 802.11be protocol, if the station that has lost medium synchronization receives an RTS frame sent by another station, the station resets (resets) the count value of the MediumSyncDelay timer to 0. However, in some cases, even if the station that has lost medium synchronization receives the RTS frame sent by the another station, the count value of the MediumSyncDelay timer needs not to be reset to 0. For example, an RTS frame received by a station (denoted as a station 1 for ease of description) that has lost medium synchronization is from another station in the blind state (that is, another station that has lost medium synchronization, denoted as a station 2 for ease of description). In other words, the another station (the station 2) in the blind state attempts to contend for a TXOP by using the RTS frame as an initial frame, and the RTS frame is just received by the station 1. This is because the station 2 also has lost medium synchronization, and channel contention of the station 2 may fail. If the channel contention of the station 2 fails, it indicates that a channel is busy (busy) in this case. In addition, because the station 1 receives the RTS frame sent by the station 2, the station 1 resets a count value of a MediumSyncDelay timer to 0. In other words, because the station 1 receives the RTS frame sent by the station 2, a limitation on channel contention of the station 1 is removed. Therefore, the station 1 may perform normal channel contention. However, in this case, the channel is busy (to be specific, the channel is occupied by a station or is in a TXOP of a station). If the station 1 performs normal channel contention, a fairness problem is still caused to another station. For example, data sent by the station 1 may collide with data transmitted by the another station.

Therefore, in embodiments of this application, exception processing is considered for the RTS frame. In an implementation, in embodiments of this application, it is restricted that the station that has lost medium synchronization cannot reset the count value of the MediumSyncDelay timer to 0 by using an RTS frame. Specifically, when the count value of the MediumSyncDelay timer is not 0, if the station that has lost medium synchronization receives a PPDU carrying a valid MPDU, and the valid MPDU does not include an RTS frame, the count value of the MediumSyncDelay timer may be reset (reset) to 0. In other words, the MediumSyncDelay timer is reset to 0 when the following event occurs: The station that has lost medium synchronization receives a PPDU carrying a valid MPDU, and the valid MPDU does not include an RTS frame. (The MediumSyncDelay timer resets to zero when the following event occurs: The STA receives a PPDU with a valid MPDU that does not contain an RTS frame.)

It can be learned that, in embodiments of this application, a case in which a limitation on channel contention is removed because the station that has lost medium synchronization receives the RTS frame sent by the another station can be avoided. Therefore, a probability of collision can be reduced, and fairness of channel contention can be improved.

However, the RTS frame received by the station that has lost medium synchronization may alternatively be sent by a station that is not in the blind state (or a station that has not lost medium synchronization). Therefore, if the station that has lost medium synchronization is directly restricted not to reset the count value of the MediumSyncDelay timer to 0 after receiving the RTS frame, RTS frames sent by some stations that are not in the blind state (or stations that have not lost medium synchronization) are also limited. In other words, when the station that has lost medium synchronization receives an RTS frame sent by a station that is not in the blind state (or a station that has not lost medium synchronization), an unnecessary limitation is caused, and therefore performance of the station that has lost medium synchronization is affected.

Therefore, embodiments of this application provide a medium synchronization delay timer setting method, to properly set a value of a medium synchronization delay timer by distinguishing between sending stations that send RTS frames. In this way, a fairness problem caused to another station because a station that has lost medium synchronization (lost medium synchronization) participates in channel contention can be resolved, and therefore a probability of collision is reduced and fairness of the channel contention is improved. In addition, impact of an unnecessary limitation on station performance can be reduced, in other words, the station performance can be improved.

The following describes in detail the technical solutions provided in this application with reference to more accompanying drawings.

The technical solutions provided in this application are described by using a plurality of embodiments. Embodiment 1 describes a method for setting a medium synchronization delay timer when at least one link pair of a non-AP MLD is an NSTR link pair. Embodiment 2 describes a method for setting a medium synchronization delay timer when at least one link pair of an AP MLD is an NSTR link pair. It should be understood that the technical solutions described in Embodiment 1 and Embodiment 2 of this application may be combined to form a new embodiment, and parts that have same or similar concepts or solutions may be mutually referenced or combined. The following describes each embodiment in detail.

It should be understood that both the AP MLD and the non-AP MLD in this application support the 802.11be protocol (or referred to as the Wi-Fi 7 or the EHT protocol), and may further support another WLAN communication protocol, for example, protocols such as 802.11ax and 802.11ac. It should be understood that the AP MLD and the non-AP MLD in this application may further support a next-generation protocol of 802.11be. In other words, the methods provided in this application are applicable to not only the 802.11be protocol, but also the next-generation protocol of 802.11be.

Optionally, the AP MLD and the non-AP MLD in this application each have at least one link pair (link pair), in other words, the AP MLD and the non-AP MLD in this application each include at least two links. Optionally, in the non-AP MLD in this application, there is at least one STA associated with an AP in the AP MLD.

### Embodiment 1

Embodiment 1 of this application mainly describes a method for setting a medium synchronization delay timer when a station that has lost medium synchronization is a non-AP STA.

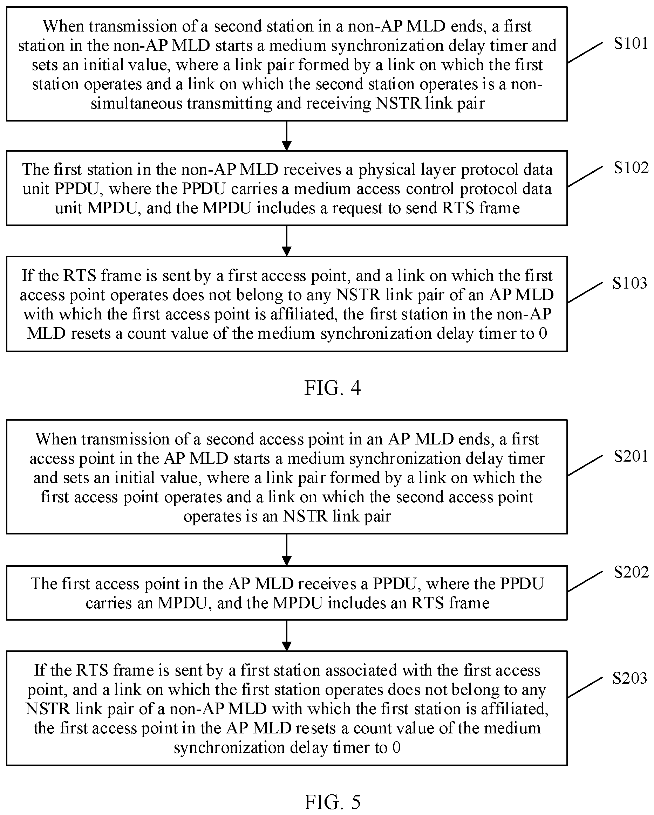

FIG. 4 is a schematic flowchart of a medium synchronization delay timer setting method according to an embodiment of this application. As shown in FIG. 4, the medium synchronization delay timer setting method includes but is not limited to the following steps:

S101: When transmission of a second station in a non-AP MLD ends, a first station in the non-AP MLD starts a medium synchronization delay timer and sets an initial value, where a link pair formed by a link on which the first station operates and a link on which the second station operates is a non-simultaneous transmitting and receiving NSTR link pair.

S102: The first station in the non-AP MLD receives a physical layer protocol data unit PPDU, where the PPDU carries a medium access control protocol data unit MPDU, and the MPDU includes a request to send RTS frame.

S103: If the RTS frame is sent by a first access point, and a link on which the first access point operates does not belong to any NSTR link pair of an AP MLD with which the first access point is affiliated, the first station in the non-AP MLD resets a count value of the medium synchronization delay timer to 0.

Optionally, one non-AP MLD may include a plurality of stations, and a station of the non-AP MLD operates on a link (an affiliated STA (if any) of the non-AP MLD that operates on a link). The non-AP MLD in this embodiment of this application includes at least two stations: the first station and the second station. It is assumed that the link on which the first station operates is a first link, and the link on which the second station operates is a second link. The first link and the second link form a link pair (link pair), and the link pair is an NSTR link pair. In other words, the first station of the non-AP MLD cannot receive a signal when the second station sends a signal. In other words, the first station of the non-AP MLD has lost medium synchronization (have lost medium synchronization). The first station of the non-AP MLD may also be referred to as a station that has lost medium synchronization or a station that has experienced a medium synchronization loss.

Optionally, when the transmission of the second station of the non-AP MLD ends, the first station of the non-AP MLD starts the medium synchronization delay (MediumSyncDelay) timer and sets the initial value. In other words, the station (that is, the first station) that has lost medium synchronization due to transmission of another station (that is, the second station) affiliated with the same MLD starts the MediumSyncDelay timer at the end of a transmission event. (A STA that has lost medium synchronization due to transmission by another STA affiliated with the same MLD shall start a MediumSyncDelay timer at the end of that transmission event.) The initial value of the MediumSyncDelay timer may be set by an AP, or may be a default value specified in a standard.

Optionally, when the count value of the MediumSyncDelay timer is not 0, the first station (that is, the station that has lost medium synchronization) of the non-AP MLD receives a PPDU, where the PPDU carries an MPDU, and the MPDU includes an RTS frame. The station knows a quantity of links of the AP MLD associated with the station, and whether each link pair (link pair) of the AP MLD is an STR or NSTR link pair. Therefore, if the RTS frame is sent by the first access point, and the link on which the first access point operates does not belong to any NSTR link pair of the AP MLD with which the first access point is affiliated, the first station in the non-AP MLD resets (resets) or sets the count value of the medium synchronization delay (MediumSyncDelay) timer to 0. That the link on which the first access point operates does not belong to any NSTR link pair of the AP MLD with which the first access point is affiliated may be understood as that the first access point does not operate on a link of any NSTR link pair of the AP MLD with which the first access point is affiliated. Alternatively, it may be understood as that any link pair formed by the first link on which the first access point operates and any link other than the first link in the AP MLD with which the first access point is affiliated is an STR link pair. For example, the AP MLD with which the first access point is affiliated has three links in total, which are separately a link 1 to a link 3. It is assumed that the first link on which the first access point operates is the link 1. Because the link 1 and the link 2 form a link pair, the link 2 and the link 3 form another link pair, and the link 1 and the link 3 form still another link pair, the link 1 and the link 2 are STR links, and the link 1 and the link 3 are also STR links. Alternatively, it may also be understood as that a link on which the first access point is located does not belong to a link in any NSTR link pair of the AP MLD with which the first access point is affiliated. Alternatively, it may also be understood as that the first access point is not on a link of any NSTR link pair.

Optionally, if the RTS frame is sent by the first access point, and the link on which the first access point operates belongs to an NSTR link pair of the AP MLD with which the first access point is affiliated, the first station in the non-AP MLD does not reset the count value of the medium synchronization delay (MediumSyncDelay) timer to 0.

In an implementation, the first access point is an access point associated with the first station. For ease of description, the access point associated with the first station is referred to as an associated AP in this specification. The medium synchronization delay timer setting method may also be described as follows: After the station (that is, the first station) that has lost medium synchronization receives an RTS frame, if the RTS frame is sent by the associated AP (that is, the access point associated with the first station), and the associated AP does not belong to any NSTR link pair, the count value of the MediumSyncDelay timer may be reset to 0 (based on the RTS frame). Otherwise, the count value of the MediumSyncDelay timer is not allowed to be reset to 0 based on the RTS frame.

As defined in the 802.11be standard, when an AP MLD is a mobile AP MLD (Mobile AP MLD), a link pair of the AP MLD may be an NSTR link pair. Otherwise, all link pairs of the AP MLD need to be STR link pairs. The NSTR mobile AP MLD has only two links, and the only two links are NSTR links. Therefore, the medium synchronization delay timer setting method may also be described as follows: After the station (that is, the first station) that has lost medium synchronization receives an RTS frame, if the RTS frame is sent by the associated AP (that is, the access point associated with the first station), and an AP MLD with which the associated AP is affiliated is not an NSTR mobile AP MLD, the count value of the MediumSyncDelay timer may be reset to 0 (based on the RTS frame). Otherwise, the count value of the MediumSyncDelay timer is not allowed to be reset to 0 based on the RTS frame. In other words, (the count value of) the MediumSyncDelay timer is reset to 0 when the following event occurs: The station (that is, the first station) that has lost medium synchronization receives a PPDU carrying a valid MPDU, and the valid MPDU does not include an RTS frame, except the RTS frame is sent by the associated AP (that is, the AP associated with the first station) affiliated with the AP MLD and the AP MLD is not an NSTR mobile AP MLD. (The MediumSyncDelay timer resets to zero when the following event occurs: The STA receives a PPDU with a valid MPDU that does not contain an RTS frame, except the RTS frame is transmitted by the associated AP affiliated with an AP MLD that is not an NSTR mobile AP MLD.)

The NSTR mobile AP MLD in this embodiment of this application may be extended to more links, and at least a part of link pairs are NSTR link pairs. Herein, any two links included in the NSTR mobile AP MLD are NSTR links, or all link pairs included in the NSTR mobile AP MLD are NSTR link pairs.

In another implementation, an access point in the 802.11be standard further supports a multiple (multiple) basic service set (basic service set, BSS) identifier (identifier, ID) feature. A plurality of APs in a multiple BSSID may share a radio frequency, and operate on a same channel/frequency band in a time division manner. Therefore, an AP (referred to as an associated AP) associated with the first station and another AP in a multiple BSSID in which the associated AP is located operate on a same link in the time division manner. Therefore, when the multiple BSSID is considered, the first access point may alternatively be another access point in the multiple BSSID in which the access point (that is, the associated AP) associated with the first station is located. The medium synchronization delay timer setting method may also be described as follows: After the station (that is, the first station) that has lost medium synchronization receives an RTS frame, if the RTS frame is sent by the another AP in the multiple BSSID in which the associated AP (that is, the access point associated with the first station) is located, and the another AP (and/or the associated AP) does not belong to any NSTR link pair, the count value of the MediumSyncDelay timer may be reset to 0 (based on the RTS frame). Otherwise, the count value of the MediumSyncDelay timer is not allowed to be reset to 0 based on the RTS frame.

Alternatively, the medium synchronization delay timer setting method may also be described as follows: After the station (that is, the first station) that has lost medium synchronization receives an RTS frame, if the RTS frame is sent by the associated AP (that is, the access point associated with the first station) or the another AP in the multiple BSSID in which the associated AP is located, and an AP MLD with which the associated AP is affiliated is not an NSTR mobile AP MLD, the count value of the MediumSyncDelay timer may be reset to 0 (based on the RTS frame). Otherwise, the count value of the MediumSyncDelay timer is not allowed to be reset to 0 based on the RTS frame. In other words, (the count value of) the MediumSyncDelay timer is reset to 0 when the following event occurs: The station (that is, the first station) that has lost medium synchronization receives a PPDU carrying a valid MPDU, and the valid MPDU does not include an RTS frame, except the RTS frame is sent by the associated AP (that is, the AP associated with the first station) or the another AP in the same multiple BSSID as the associated AP, and the AP MLD with which the associated AP is affiliated is not an NSTR mobile AP MLD. (The MediumSyncDelay timer resets to zero when the following event occurs: The STA receives a PPDU with a valid MPDU that does not contain an RTS frame, except the RTS frame is transmitted by the associated AP or another AP in the same multiple BSSID of the associated AP, and the associated AP affiliated with an AP MLD that is not an NSTR mobile AP MLD.)

It can be learned that in this embodiment of this application, after receiving an RTS frame, the station (referring to the first station) that has lost medium synchronization determines, by determining a sending station of the RTS frame and whether a link on which the sending station operates belongs to an NSTR link pair, whether the count value of the MediumSyncDelay timer needs to be set to 0, and may perform different processing on the MediumSyncDelay timer based on different sending stations (stations in a broad sense, which refer to APs herein) of RTS frames. In other words, if the sending station of the RTS frame is in a blind state or has lost medium synchronization, the count value of the MediumSyncDelay timer is not allowed to be reset to 0; or if the sending station of the RTS frame is not in the blind state or has not lost medium synchronization, the count value of the MediumSyncDelay timer is reset to 0. Through implementation of this embodiment of this application, a fairness problem caused to another station because the station that has lost medium synchronization participates in channel contention can be resolved, and therefore a probability of collision is reduced and fairness of the channel contention is improved. In addition, impact of an unnecessary limitation on station performance can be reduced, in other words, the station performance can be improved.

### Embodiment 2

It should be understood that Embodiment 1 mainly considers a case in which a station receiving an RTS frame is a non-AP STA, but an AP included in an NSTR mobile AP MLD may also lose medium synchronization. Therefore, Embodiment 2 of this application mainly describes a method for setting a medium synchronization delay timer when a station that has lost medium synchronization is an AP. Embodiment 2 of this application may be separately implemented, or may be implemented in combination with Embodiment 1. This is not limited in this application.

FIG. 5 is another schematic flowchart of a medium synchronization delay timer setting method according to an embodiment of this application. As shown in FIG. 5, the medium synchronization delay timer setting method includes but is not limited to the following steps:
S201: When transmission of a second access point in an AP MLD ends, a first access point in the AP MLD starts a medium synchronization delay timer and sets an initial value, where a link pair formed by a link on which the first access point operates and a link on which the second access point operates is an NSTR link pair.
S202: The first access point in the AP MLD receives a PPDU, where the PPDU carries an MPDU, and the MPDU includes an RTS frame.
S203: If the RTS frame is sent by a first station associated with the first access point, and a link on which the first station operates does not belong to any NSTR link pair of a non-AP MLD with which the first station is affiliated, the first access point in the AP MLD resets a count value of the medium synchronization delay timer to 0.

Optionally, the AP MLD in this embodiment of this application may be an NSTR mobile AP MLD. Optionally, in this embodiment of this application, at least one link pair in a link pair of the NSTR mobile AP MLD is an NSTR link pair. One AP MLD may include a plurality of APs, one AP of the AP MLD operates on one link, and one AP may be associated with one STA. The AP MLD in this embodiment of this application includes at least two access points: the first access point and the second access point. It is assumed that the link on which the first access point operates is a first link, and the link on which the second access point operates is a second link. The first link and the second link form a link pair (link pair), and the link pair is an NSTR link pair. In other words, the first access point of the AP MLD cannot receive a signal when the second access point sends a signal. In other words, the first access point of the AP MLD has lost medium synchronization (have lost medium synchronization). The first access point of the AP MLD may also be referred to as an AP that has lost medium synchronization or an AP that has experienced a medium synchronization loss.

Optionally, when the transmission of the second access point of the AP MLD ends, the first access point of the AP MLD starts the medium synchronization delay (MediumSyncDelay) timer and sets the initial value. In other words, the AP (that is, the first access point) that has lost medium synchronization due to transmission of another AP (that is, the second access point) affiliated with the same MLD starts the MediumSyncDelay timer at the end of a transmission event. The initial value of the MediumSyncDelay timer may be set by the AP, or may be a default value specified in a standard.

Optionally, when the count value of the MediumSyncDelay timer is not 0, the first access point (that is, the AP that has lost medium synchronization) of the AP MLD receives a PPDU, where the PPDU carries an MPDU, and the MPDU includes an RTS frame. The first access point knows a quantity of links of the non-AP MLD associated with the first access point, and whether each link pair (link pair) of the non-AP MLD is an STR or NSTR link pair. Therefore, if the RTS frame is sent by the first station associated with the first access point, and the link on which the first station operates does not belong to any NSTR link pair of the non-AP MLD with which the first station is affiliated, the first access point in the AP MLD resets the count value of the medium synchronization delay timer to 0. For ease of description, in this embodiment of this application, the first station associated with the first access point is referred to as an associated STA. That the link on which the first station operates does not belong to any NSTR link pair of the non-AP MLD with which the first station is affiliated may be understood as that the first station does not operate on a link of any NSTR link pair of the non-AP MLD with which the first station is affiliated. Alternatively, it may be understood as that any link pair formed by the first link on which the first station operates and any link other than the first link in the non-AP MLD with which the first station is affiliated is an STR link pair. Alternatively, it may be understood as that a link on which the first station is located does not belong to a link in any NSTR link pair of the non-AP MLD with which the first station is affiliated. Alternatively, it may be understood as that the first station is not on a link of any NSTR link pair.

Optionally, if the RTS frame is sent by the first station associated with the first access point, and the link on which the first station operates belongs to an NSTR link pair of the non-AP MLD with which the first station is affiliated, the first access point in the AP MLD does not reset the count value of the medium synchronization delay timer to 0.

In other words, the medium synchronization delay timer setting method may also be described as follows: When an AP (that is, the first access point) that has lost medium synchronization receives an RTS frame, if the RTS frame is sent by a STA associated with the AP, and a link on which the STA is located does not belong to a link in any NSTR link pair, a count value of a MediumSyncDelay timer may be reset to 0 (based on the RTS frame). Otherwise, the count value of the MediumSyncDelay timer is not allowed to be reset to 0 based on the RTS frame. In other words, (the count value of) the MediumSyncDelay timer is reset to 0 when the following event occurs: The station that has lost medium synchronization receives a PPDU carrying a valid MPDU, and the valid MPDU does not include an RTS frame, except the station that has lost medium synchronization is an AP (that is, the first access point) affiliated with an NSTR mobile AP MLD, the RTS frame is sent by the associated STA (that is, the STA associated with the first access point) affiliated with the MLD, and the associated STA is not on a link of any NSTR link pair. (The MediumSyncDelay timer resets to zero when the following event occurs: The STA receives a PPDU with a valid MPDU that does not contain an RTS frame, except the STA is an AP affiliated with an NSTR mobile AP MLD, and the RTS is transmitted by an associated STA which is affiliated with an MLD and the associated STA is not on a link of any NSTR link pair(s).)

It can be learned that, in this embodiment of this application, a method for setting a MediumSyncDelay timer on a station side is extended to an AP side. When the AP (that is, the first access point) affiliated with the NSTR mobile AP MLD has lost medium synchronization, when an RTS frame received by the AP is from a station that is not in a blind state or has not lost medium synchronization, the count value of the MediumSyncDelay timer is reset to 0. Through implementation of this embodiment of this application, a fairness problem caused to another station because the AP side directly participates in channel contention due to a medium synchronization loss can be resolved, and therefore a probability of collision is reduced and fairness of the channel contention is improved. In addition, impact of an unnecessary limitation on performance of the NSTR mobile AP MLD can be reduced, in other words, the performance can be improved.

In an optional embodiment, the technical solutions provided in this application may alternatively be implemented by combining Embodiment 1 and Embodiment 2. Specifically, (a count value of) a MediumSyncDelay timer is reset to 0 when the following event occurs:

A station that has lost medium synchronization receives a PPDU carrying a valid MPDU, and the valid MPDU does not include an RTS frame, except the station that has lost medium synchronization is a non-AP STA (that is, the first station), the RTS frame is sent by an associated AP (that is, the AP associated with the first station) affiliated with an AP MLD, and the AP MLD is not an NSTR mobile AP MLD; or the station that has lost medium synchronization is an AP (that is, the first access point) affiliated with an NSTR mobile AP MLD, the RTS frame is sent by an associated STA (that is, the STA associated with the first access point) affiliated with the MLD, and the associated STA is not on a link of any NSTR link pair. (The MediumSyncDelay timer resets to zero when the following event occurs: The STA receives a PPDU with a valid MPDU that does not contain an RTS frame, except the STA is a non-AP STA, and the RTS frame is transmitted by the associated AP affiliated with an AP MLD that is not an NSTR mobile AP MLD, or the STA is an AP affiliated with an NSTR mobile AP MLD, and the RTS is transmitted by an associated STA which is affiliated with an MLD and the associated STA is not on a link of any NSTR link pair(s).)

Optionally, when a multiple BSSID is considered, (a count value of) a MediumSyncDelay timer is reset to 0 when the following event occurs:
A station that has lost medium synchronization receives a PPDU carrying a valid MPDU, and the valid MPDU does not include an RTS frame, except the station that has lost medium synchronization is a non-AP STA (that is, the first station), the RTS frame is sent by an associated AP (that is, the access point associated with the first station) or another AP in a multiple BSSID in which the associated AP is located, and an AP MLD with which the associated AP is affiliated is not an NSTR mobile AP MLD; or the station that has lost medium synchronization is an AP (that is, the first access point) affiliated with an NSTR mobile AP MLD, the RTS frame is sent by an associated STA (that is, the STA associated with the first access point) affiliated with the MLD, and the associated STA is not on a link of any NSTR link pair. (The MediumSyncDelay timer resets to zero when the following event occurs: The STA receives a PPDU with a valid MPDU that does not contain an RTS frame, except the STA is a non-AP STA, and the RTS frame is transmitted by the associated AP or another AP in the same multiple BSSID of associated AP, and the associated AP affiliated with an AP MLD that is not an NSTR mobile AP MLD, or the STA is an AP affiliated with an NSTR mobile AP MLD, and the RTS is transmitted by an associated STA which is affiliated with an MLD and the associated STA is not on a link of any NSTR link pair(s).)

The foregoing content describes in detail the methods provided in this application. To facilitate implementation of the foregoing solutions in embodiments of this application, embodiments of this application further provide corresponding apparatuses or devices.

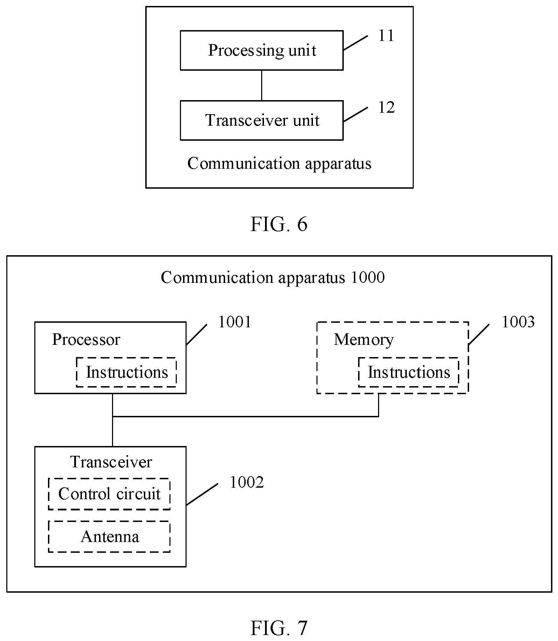

In embodiments of this application, the AP MLD and the non-AP MLD may be divided into functional modules based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation. Communication apparatuses in embodiments of this application are described below in detail with reference to FIG. 6 and FIG. 7. The communication apparatus is an AP MLD or a non-AP MLD. Further, the communication apparatus may be an apparatus in the AP MLD, or the communication apparatus is an apparatus in the non-AP MLD.

When an integrated unit is used, refer to FIG. 6. FIG. 6 is a schematic diagram of a structure of a communication apparatus according to an embodiment of this application. As shown in FIG. 6, the communication apparatus includes a processing unit 11 and a transceiver unit 12.

In a design, the communication apparatus may be a non-AP MLD or a chip in the non-AP MLD, for example, a Wi-Fi chip. The processing unit 11 is configured to: when transmission of a second station in the non-AP MLD ends, start a medium synchronization delay timer and set an initial value, where a link pair formed by a link on which the communication apparatus operates and a link on which the second station operates is an NSTR link pair. The transceiver unit 12 is configured to receive a PPDU, where the PPDU carries an MPDU, and the MPDU includes an RTS frame. The processing unit 11 is further configured to: when the RTS frame is sent by a first access point, and a link on which the first access point operates does not belong to any NSTR link pair of an AP MLD with which the first access point is affiliated, reset a count value of the medium synchronization delay timer to 0. The first access point is an access point associated with the communication apparatus, or the first access point is another access point in a multiple BSSID in which the access point associated with the communication apparatus is located.

Optionally, that a link on which the first access point operates does not belong to any NSTR link pair of an AP MLD with which the first access point is affiliated includes: The AP MLD with which the first access point is affiliated is not an NSTR mobile AP MLD, and any two links included in the NSTR mobile AP MLD are NSTR links.

Optionally, the processing unit 11 is further configured to: when the RTS frame is sent by the first access point, and the AP MLD with which the first access point is affiliated is the NSTR mobile AP MLD, skip resetting the count value of the medium synchronization delay timer to 0.

Optionally, the processing unit 11 is further configured to: when the RTS frame is sent by the first access point, and the link on which the first access point operates belongs to any NSTR link pair of the AP MLD with which the first access point is affiliated, skip resetting the medium synchronization delay timer to 0.

It should be understood that the communication apparatus in this design may correspondingly perform Embodiment 1, and the foregoing operations or functions of the units in the communication apparatus are used to implement corresponding operations of the non-AP MLD in Embodiment 1. For brevity, details are not described herein again.

In another design, the communication apparatus may be an AP MLD or a chip in the AP MLD, for example, a Wi-Fi chip. The processing unit 11 is configured to: when transmission of a second access point in the AP MLD ends, start a medium synchronization delay timer and set an initial value, where a link pair formed by a link on which the communication apparatus operates and a link on which the second access point operates is an NSTR link pair. The transceiver unit 12 is configured to receive a PPDU, where the PPDU carries an MPDU, and the MPDU includes an RTS frame. The processing unit 11 is further configured to: when the RTS frame is sent by a first station associated with the communication apparatus, and a link on which the first station operates does not belong to any NSTR link pair of a non-AP MLD with which the first station is affiliated, reset a count value of the medium synchronization delay timer to 0.

Optionally, the processing unit 11 is further configured to: when the RTS frame is sent by the first station associated with the communication apparatus, and the link on which the first station operates belongs to an NSTR link pair of the non-AP MLD with which the first station is affiliated, skip resetting the count value of the medium synchronization delay timer to 0.

It should be understood that the communication apparatus in this design may correspondingly perform Embodiment 2, and the foregoing operations or functions of the units in the communication apparatus are used to implement corresponding operations of the AP MLD in Embodiment 2. For brevity, details are not described herein again.

The foregoing describes the AP MLD and the non-AP MLD in embodiments of this application. The following describes possible product forms of the AP MLD and the non-AP MLD. It should be understood that any form of product having the functions of the non-AP MLD or the AP MLD described in FIG. 6 falls within the protection scope of embodiments of this application. It should be further understood that the following descriptions are merely an example, and product forms of the AP MLD and the non-AP MLD in embodiments of this application are not limited thereto.

As a possible product form, the AP MLD and the non-AP MLD described in embodiments of this application may be implemented by using a general bus architecture.

For ease of description, refer to FIG. 7. FIG. 7 is a schematic diagram of a structure of a communication apparatus 1000 according to an embodiment of this application. The communication apparatus 1000 may be an AP MLD or a non-AP MLD, or a chip in the AP MLD or the non-AP MLD. FIG. 7 shows only main components in the communication apparatus 1000. In addition to a processor 1001 and a transceiver 1002, the communication apparatus may further include a memory 1003 and an input/output apparatus (not shown in the figure).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to perform conversion between a baseband signal and a radio frequency signal and process the radio frequency signal. The antenna is mainly configured to receive and send radio frequency signals in a form of an electromagnetic wave. The input/output apparatus, for example, a touchscreen, a display, or a keyboard, is mainly configured to receive data input by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

The processor 1001, the transceiver 1002, and the memory 1003 may be connected through a communication bus.

In a design, the communication apparatus 1000 may be configured to perform the functions of the non-AP MLD in Embodiment 1. The processor 1001 may be configured to perform step S101 and step S103 in FIG. 4, and/or configured to perform another process of the technology described in this specification. The transceiver 1002 may be configured to perform step S102 in FIG. 4, and/or configured to perform another process of the technology described in this specification.

In another design, the communication apparatus 1000 may be configured to perform the functions of the AP MLD in Embodiment 2. The processor 1001 may be configured to perform step S201 and step S203 in FIG. 5, and/or configured to perform another process of the technology described in this specification. The transceiver 1002 may be configured to perform step S202 in FIG. 5, and/or configured to perform another process of the technology described in this specification.

In any one of the foregoing designs, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions. The instructions may be a computer program. The computer program is run on the processor 1001, so that the communication apparatus 1000 is enabled to perform the method described in any one of the foregoing method embodiments. The computer program may be fixed in the processor 1001. In this case, the processor 1001 may be implemented by hardware.

In an implementation, the communication apparatus 1000 may include a circuit. The circuit may implement the sending, receiving, or communication function in the foregoing method embodiments. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (N-type metal oxide semiconductor, NMOS), a P-type metal oxide semiconductor (P-type metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited in FIG. 7. The communication apparatus may be an independent device or may be a part of a larger device. For example, the communication apparatus may be:
(1) an independent integrated circuit IC, a chip, or a chip system or subsystem;
(2) a set including one or more ICs, where optionally, the set of ICs may also include a storage component configured to store data and a computer program;
(3) an ASIC, for example, a modem (Modem);
(4) a module that may be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) another device or the like.

As a possible product form, the AP MLD and the non-AP MLD described in embodiments of this application may be implemented by a general-purpose processor.

A general-purpose processor that implements the non-AP MLD includes a processing circuit and an input/output interface that is internally connected to and communicates with the processing circuit. The general-purpose processor may be configured to perform the functions of the non-AP MLD in Embodiment 1. Specifically, the processing circuit may be configured to perform step S101 and step S103 in FIG. 4, and/or another process of the technology described in this specification. The input/output interface may be configured to perform step S102 in FIG. 4, and/or another process of the technology described in this specification.

A general-purpose processor that implements the AP MLD includes a processing circuit and an input/output interface that is internally connected to and communicates with the processing circuit. The general-purpose processor may be configured to perform the functions of the AP MLD in Embodiment 2. Specifically, the processing circuit may be configured to perform step S201 and step S203 in FIG. 5, and/or another process of the technology described in this specification. The input/output interface may be configured to perform step S202 in FIG. 5, and/or another process of the technology described in this specification.

It should be understood that the communication apparatuses in the foregoing various product forms have any function of the AP MLD or the non-AP MLD in the method embodiments. Details are not described herein again.

An embodiment of this application further provides a computer-readable storage medium. The computer-readable storage medium stores computer program code. When the foregoing processor executes the computer program code, an electronic device performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through a receive circuit, so that the apparatus performs the method in any one of the foregoing embodiments.

An embodiment of this application further provides a wireless communication system. The system includes an AP MLD and a non-AP MLD. The AP MLD and the non-AP MLD may perform the method in any one of the foregoing embodiments.

Method or algorithm steps described in combination with content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, the storage medium is coupled to the processor, so that the processor can read information from the storage medium or write information into the storage medium. Certainly, the storage medium may alternatively be a component of the processor. The processor and the storage medium may be located in an ASIC. In addition, the ASIC may be located in a core network interface device. Certainly, the processor and the storage medium may alternatively exist in the core network interface device as discrete components.

A person skilled in the art should be aware that in one or more of the foregoing examples, the functions described in this application may be implemented by using hardware, software, firmware, or any combination thereof. When the software is used to implement the functions, the foregoing functions may be stored in a computer-readable medium or transmitted as one or more instructions or code in the computer-readable medium. The computer-readable medium includes a computer-readable storage medium and a communication medium, where the communication medium includes any medium that enables a computer program to be transmitted from one place to another. The storage medium may be any available medium accessible to a general-purpose or dedicated computer.

In the foregoing specific implementations, the objectives, technical solutions, and beneficial effects of this application are further described in detail. It should be understood that the foregoing descriptions are merely specific implementations of this application, but are not intended to limit the protection scope of this application. The protection scope of this application is solely limited by the appended claims.

## Claims

1. A medium synchronization delay timer setting method, comprising:
when transmission of a second station in a non-access point station multi-link device non-AP MLD ends, starting, by a first station in the non-AP MLD, a medium synchronization delay timer and setting an initial value, wherein a link pair formed by a link on which the first station operates and a link on which the second station operates is a non-simultaneous transmitting and receiving NSTR link pair, and the initial value is not 0;
receiving, by the first station in the non-AP MLD, a physical layer protocol data unit PPDU, wherein the PPDU carries a medium access control protocol data unit MPDU, and the MPDU comprises a request to send RTS frame; and
if the RTS frame is sent by a first access point, and a link on which the first access point operates does not belong to any NSTR link pair of an access point multi-link device AP MLD with which the first access point is affiliated, resetting, by the first station in the non-AP MLD, a count value of the medium synchronization delay timer to 0, wherein
the first access point is an access point associated with the first station, or the first access point is another access point in a multiple basic service set identifier BSSID in which the access point associated with the first station is located.

2. The method according to claim 1, wherein that a link on which the first access point operates does not belong to any NSTR link pair of an access point multi-link device AP MLD with which the first access point is affiliated comprises:
the AP MLD with which the first access point is affiliated is not an NSTR mobile AP MLD, and any two links comprised in the NSTR mobile AP MLD are NSTR links.

3. The method according to claim 2, wherein the method further comprises:
if the RTS frame is sent by the first access point, and the AP MLD with which the first access point is affiliated is the NSTR mobile AP MLD, skipping resetting, by the first station in the non-AP MLD, the count value of the medium synchronization delay timer to 0.

4. The method according to claim 1, wherein the method further comprises:
if the RTS frame is sent by the first access point, and the link on which the first access point operates belongs to an NSTR link pair of the AP MLD with which the first access point is affiliated, skipping resetting, by the first station in the non-AP MLD, the count value of the medium synchronization delay timer to 0.

5. A medium synchronization delay timer setting method, comprising:
when transmission of a second access point in an AP MLD ends, starting, by a first access point in the AP MLD, a medium synchronization delay timer and setting an initial value, wherein a link pair formed by a link on which the first access point operates and a link on which the second access point operates is an NSTR link pair, and the initial value is not 0;
receiving, by the first access point in the AP MLD, a PPDU, wherein the PPDU carries an MPDU, and the MPDU comprises an RTS frame; and
if the RTS frame is sent by a first station associated with the first access point, and a link on which the first station operates does not belong to any NSTR link pair of a non-AP MLD with which the first station is affiliated, resetting, by the first access point in the AP MLD, a count value of the medium synchronization delay timer to 0.

6. The method according to claim 5, wherein the method further comprises:
if the RTS frame is sent by the first station associated with the first access point, and the link on which the first station operates belongs to an NSTR link pair of the non-AP MLD with which the first station is affiliated, skipping resetting, by the first access point in the AP MLD, the count value of the medium synchronization delay timer to 0.

7. A communication apparatus, comprising:
a processing unit, configured to: when transmission of a second station in a non-AP MLD ends, start a medium synchronization delay timer and set an initial value, wherein a link pair formed by a link on which a first station operates and a link on which the second station operates is an NSTR link pair, and the initial value is not 0; and
a transceiver unit, configured to receive a PPDU, wherein the PPDU carries an MPDU, and the MPDU comprises an RTS frame, wherein
the processing unit is further configured to: when the RTS frame is sent by a first access point, and a link on which the first access point operates does not belong to any NSTR link pair of an access point multi-link device AP MLD with which the first access point is affiliated, reset a count value of the medium synchronization delay timer to 0; and
the first access point is an access point associated with the first station, or the first access point is another access point in a multiple basic service set identifier BSSID in which the access point associated with the first station is located.

8. The communication apparatus according to claim 7, wherein that a link on which the first access point operates does not belong to any NSTR link pair of an access point multi-link device AP MLD with which the first access point is affiliated comprises:
the AP MLD with which the first access point is affiliated is not an NSTR mobile AP MLD, and any two links comprised in the NSTR mobile AP MLD are NSTR links.

9. The communication apparatus according to claim 8, wherein the processing unit is further configured to:
when the RTS frame is sent by the first access point, and the AP MLD with which the first access point is affiliated is the NSTR mobile AP MLD, skip resetting the count value of the medium synchronization delay timer to 0.

10. The communication apparatus according to claim 7, wherein the processing unit is further configured to:
when the RTS frame is sent by the first access point, and the link on which the first access point operates belongs to an NSTR link pair of the AP MLD with which the first access point is affiliated, skip resetting the count value of the medium synchronization delay timer to 0.

11. A communication apparatus, comprising:
a processing unit, configured to: when transmission of a second access point in an AP MLD ends, start a medium synchronization delay timer and set an initial value, wherein a link pair formed by a link on which a first access point operates and a link on which the second access point operates is an NSTR link pair, and the initial value is not 0; and
a transceiver unit, configured to receive a PPDU, wherein the PPDU carries an MPDU, and the MPDU comprises an RTS frame, wherein
the processing unit is further configured to: when the RTS frame is sent by a first station associated with the first access point, and a link on which the first station operates does not belong to any NSTR link pair of a non-AP MLD with which the first station is affiliated, reset a count value of the medium synchronization delay timer to 0.

12. The communication apparatus according to claim 11, wherein the processing unit is further configured to:
when the RTS frame is sent by the first station associated with the first access point, and the link on which the first station operates belongs to an NSTR link pair of the non-AP MLD with which the first station is affiliated, skip resetting the count value of the medium synchronization delay timer to 0.

13. A communication apparatus, comprising a processor and a transceiver, wherein the transceiver is configured to send and receive PPDUs; and when the processor runs program instructions, the communication apparatus is enabled to perform the method according to any one of claims 1 to 6.

14. A computer-readable storage medium, wherein the computer-readable storage medium stores program instructions; and when the program instructions are run on a computer, the computer is enabled to perform the method according to any one of claims 1 to 6.

15. A computer program product comprising program instructions, wherein when the program instructions are run on a computer, the computer is enabled to perform the method according to any one of claims 1 to 6.

## Patentansprüche

1. Verfahren zur Einstellung eines Mediumsynchronisationsverzögerungstimers, umfassend:
wenn eine Übertragung einer zweiten Station in einem Mehrfachverbindungsgerät ohne Zugangspunktstation, Nicht-AP-MLD, endet, Starten, durch eine erste Station in dem Nicht-AP-MLD, eines Mediumsynchronisationsverzögerungstimers und Einstellen eines Anfangswerts, wobei ein Verbindungspaar, das aus einer Verbindung, auf der die erste Station betrieben wird, und einer Verbindung, auf der die zweite Station betrieben wird, gebildet wird, ein nicht gleichzeitig sendendes und empfangendes Verbindungspaar, NSTR-Verbindungspaar, ist und der Anfangswert ungleich 0 ist;
Empfangen, durch die erste Station in dem Nicht-AP-MLD, einer Protokolldateneinheit für eine physikalische Schicht, PPDU, wobei die PPDU eine Protokolldateneinheit zur Mediumzugangssteuerung, MPDU, trägt und die MPDU eine Anforderung zum Senden eines RTS-Frames umfasst; und
wenn der RTS-Frame durch einen ersten Zugangspunkt gesendet wird und eine Verbindung, auf welcher der erste Zugangspunkt betrieben wird, nicht zu einem NSTR-Verbindungspaar eines Mehrfachverbindungsgeräts mit Zugangspunkt, AP-MLD, dem der erste Zugangspunkt angegliedert ist, gehört, Zurücksetzen, durch die erste Station in dem Nicht-AP-MLD, eines Zählwerts des Mediumsynchronisationsverzögerungstimers auf 0, wobei
der erste Zugangspunkt ein Zugangspunkt ist, welcher der ersten Station zugeordnet ist, oder der erste Zugangspunkt ein anderer Zugangspunkt in einer Mehrfach-Basic-Service-Set-Kennung, BSSID, ist, in dem sich der Zugangspunkt befindet, welcher der ersten Station zugeordnet ist.

2. Verfahren nach Anspruch 1, wobei, dass eine Verbindung, auf welcher der erste Zugangspunkt betrieben wird, nicht zu einem NSTR-Verbindungspaar eines Mehrfachverbindungsgeräts mit Zugangspunkt, AP-MLD, gehört, dem der erste Zugangspunkt zugeordnet ist, Folgendes umfasst:
das AP-MLD, das dem ersten Zugangspunkt angegliedert ist, ist kein mobiles NSTR-AP-MLD, und alle zwei Verbindungen, die in dem mobilen NSTR-AP-MLD umfasst sind, sind NSTR-Verbindungen.

3. Verfahren nach Anspruch 2, wobei das Verfahren ferner Folgendes umfasst:
wenn der RTS-Frame durch den ersten Zugangspunkt gesendet wird und das AP-MLD, dem der erste Zugangspunkt angegliedert ist, das mobile NSTR-AP-MLD ist, Überspringen des Zurücksetzens, durch die erste Station in dem Nicht-AP-MLD, des Zählwerts des Mediumsynchronisationsverzögerungstimers auf 0.

4. Verfahren nach Anspruch 1, wobei das Verfahren ferner Folgendes umfasst:
wenn der RTS-Rahmen durch den ersten Zugangspunkt gesendet wird und die Verbindung, auf welcher der erste Zugangspunkt betrieben wird, zu einem NSTR-Verbindungspaar des AP-MLD gehört, dem der erste Zugangspunkt angegliedert ist, Überspringen des Zurücksetzens, durch die erste Station in dem Nicht-AP-MLD, des Zählwerts des Mediumsynchronisationsverzögerungstimers auf 0.

5. Verfahren zur Einstellung eines Mediumsynchronisationsverzögerungstimers, umfassend:
wenn eine Übertragung eines zweiten Zugangspunkts in einem AP-MLD endet, Starten, durch einen ersten Zugangspunkt in dem AP-MLD, eines Mediumsynchronisationsverzögerungstimers und Einstellen eines Anfangswerts, wobei ein Verbindungspaar, das aus einer Verbindung, auf welcher der erste Zugangspunkt betrieben wird, und einer Verbindung, auf welcher der zweite Zugangspunkt betrieben wird, gebildet wird, ein NSTR-Verbindungspaar ist und der Anfangswert ungleich 0 ist;
Empfangen, durch den ersten Zugangspunkt in dem AP-MLD, einer PPDU, wobei die PPDU eine MPDU trägt und die MPDU einen RTS-Frame umfasst; und
wenn der RTS-Frame durch eine erste Station gesendet wird, die dem ersten Zugangspunkt zugeordnet ist, und eine Verbindung, auf der die erste Station betrieben wird, nicht zu einem NSTR-Verbindungspaar eines Nicht-AP-MLD gehört, dem die erste Station angegliedert ist, Zurücksetzen, durch den ersten Zugangspunkt in dem AP-MLD, eines Zählwerts des Mediumsynchronisationsverzögerungstimers auf 0.

6. Verfahren nach Anspruch 5, wobei das Verfahren ferner Folgendes umfasst:
wenn der RTS-Frame durch die erste Station gesendet wird, die dem ersten Zugangspunkt zugeordnet ist, und die Verbindung, auf der die erste Station betrieben wird, zu einem NSTR-Verbindungspaar des Nicht-AP-MLD gehört, dem die erste Station angegliedert ist, Überspringen des Zurücksetzens, durch den ersten Zugangspunkt in dem AP-MLD, des Zählwerts des Mediumsynchronisationsverzögerungstimers auf 0.

7. Kommunikationsvorrichtung, umfassend:
eine Verarbeitungseinheit, die zu Folgendem konfiguriert ist: wenn eine Übertragung einer zweiten Station in einem Nicht-AP-MLD endet, Starten eines Mediumsynchronisationsverzögerungstimers und Einstellen eines Anfangswerts, wobei ein Verbindungspaar, das aus einer Verbindung, auf der eine erste Station betrieben wird, und einer Verbindung, auf der die zweite Station betrieben wird, gebildet wird, ein NSTR-Verbindungspaar ist und der Anfangswert ungleich 0 ist; und
eine Sendeempfängereinheit, die dazu konfiguriert ist, eine PPDU zu empfangen, wobei die PPDU eine MPDU trägt und die MPDU einen RTS-Frame umfasst, wobei
die Verarbeitungseinheit ferner zu Folgendem konfiguriert ist: wenn der RTS-Frame durch einen ersten Zugangspunkt gesendet wird und eine Verbindung, auf welcher der erste Zugangspunkt betrieben wird, nicht zu einem NSTR-Verbindungspaar eines Mehrfachverbindungsgeräts mit Zugangspunkt, AP-MLD, dem der erste Zugangspunkt angegliedert ist, gehört, Zurücksetzen einen Zählwerts des Medium-Synchronisationsverzögerungszeitgebers auf 0; und
der erste Zugangspunkt ein Zugangspunkt ist, welcher der ersten Station zugeordnet ist, oder der erste Zugangspunkt ein anderer Zugangspunkt in einer Mehrfach-Basic-Service-Set-Kennung, BSSID, ist, in dem sich der Zugangspunkt befindet, welcher der ersten Station zugeordnet ist.

8. Kommunikationsvorrichtung nach Anspruch 7, wobei, dass eine Verbindung, auf welcher der erste Zugangspunkt betrieben wird, nicht zu einem NSTR-Verbindungspaar eines Mehrfachverbindungsgeräts mit Zugangspunkt, AP-MLD, gehört, dem der erste Zugangspunkt angegliedert ist, Folgendes umfasst:
das AP-MLD, das dem ersten Zugangspunkt angegliedert ist, ist kein mobiles NSTR-AP-MLD, und alle zwei Verbindungen, die in dem mobilen NSTR-AP-MLD umfasst sind, sind NSTR-Verbindungen.

9. Kommunikationsvorrichtung nach Anspruch 8, wobei die Verarbeitungseinheit ferner zu Folgendem konfiguriert ist:
wenn der RTS-Frame durch den ersten Zugangspunkt gesendet wird und das AP-MLD, dem der erste Zugangspunkt angegliedert ist, das mobile NSTR-AP-MLD ist, Überspringen des Zurücksetzens des Zählwerts des Mediumsynchronisationsverzögerungstimers auf 0.

10. Kommunikationsvorrichtung nach Anspruch 7, wobei die Verarbeitungseinheit ferner zu Folgendem konfiguriert ist:
wenn der RTS-Rahmen durch den ersten Zugangspunkt gesendet wird und die Verbindung, auf welcher der erste Zugangspunkt betrieben wird, zu einem NSTR-Verbindungspaar des AP-MLD gehört, dem der erste Zugangspunkt angegliedert ist, Überspringen des Zurücksetzens des Zählwerts des Mediumsynchronisationsverzögerungstimers auf 0.

11. Kommunikationsvorrichtung, umfassend:
eine Verarbeitungseinheit, die zu Folgendem konfiguriert ist: wenn eine Übertragung eines zweiten Zugangspunkts in einem AP-MLD endet, Starten eines Mediumsynchronisationsverzögerungstimers und Einstellen eines Anfangswerts, wobei ein Verbindungspaar, das aus einer Verbindung, auf der ein erster Zugangspunkt betrieben wird, und einer Verbindung, auf welcher der zweite Zugangspunkt betrieben wird, gebildet wird, ein NSTR-Verbindungspaar ist und der Anfangswert ungleich 0 ist; und
eine Sendeempfängereinheit, die dazu konfiguriert ist, eine PPDU zu empfangen, wobei die PPDU eine MPDU trägt und die MPDU einen RTS-Frame umfasst, wobei
die Verarbeitungseinheit ferner zu Folgendem konfiguriert ist: wenn der RTS-Frame durch eine erste Station gesendet wird, die dem ersten Zugangspunkt zugeordnet ist, und eine Verbindung, auf der die erste Station betrieben wird, nicht zu einem NSTR-Verbindungspaar eines Nicht-AP-MLD gehört, dem die erste Station angegliedert ist, Zurücksetzen eines Zählwerts des Mediumsynchronisationsverzögerungstimers auf 0.

12. Kommunikationsvorrichtung nach Anspruch 11, wobei die Verarbeitungseinheit ferner zu Folgendem konfiguriert ist:
wenn der RTS-Frame durch die erste Station gesendet wird, die dem ersten Zugangspunkt zugeordnet ist, und die Verbindung, auf der die erste Station betrieben wird, zu einem NSTR-Verbindungspaar des Nicht-AP-MLD gehört, dem die erste Station angegliedert ist, Überspringen des Zurücksetzens des Zählwerts des Mediumsynchronisationsverzögerungstimers auf 0.

13. Kommunikationsvorrichtung, umfassend einen Prozessor und einen Sendeempfänger, wobei der Sendeempfänger dazu konfiguriert ist, PPDUs zu senden und zu empfangen; und, wenn der Prozessor Programmanweisungen ausführt, die Kommunikationsvorrichtung in die Lage versetzt wird, das Verfahren nach einem der Ansprüche 1 bis 6 durchzuführen.

14. Computerlesbares Speichermedium, wobei das computerlesbare Speichermedium Programmanweisungen speichert; und, wenn die Programmanweisungen auf einem Computer ausgeführt werden, der Computer in die Lage versetzt wird, das Verfahren nach einem der Ansprüche 1 bis 6 durchzuführen.

15. Computerprogrammprodukt, umfassend Programmanweisungen, wobei, wenn die Programmanweisungen auf einem Computer ausgeführt werden, der Computer in die Lage versetzt wird, das Verfahren nach einem der Ansprüche 1 bis 6 durchzuführen.

## Revendications

1. Procédé de réglage de temporisateur de synchronisation de support, comprenant :
lorsque la transmission d'une seconde station dans un dispositif multi-liaison de station non point d'accès MLD non AP se termine, le démarrage, par une première station dans le MLD non AP, d'un temporisateur de synchronisation de support et la définition d'une valeur initiale, dans lequel une paire de liaisons formée par une liaison sur laquelle la première station opère et une liaison sur laquelle la seconde station opère est une paire de liaisons de transmission et de réception non simultanées, NSTR, et la valeur initiale n'est pas 0 ;
la réception, par la première station dans le MLD non AP, d'une unité de données de protocole de couche physique PPDU, dans lequel le PPDU transporte une unité de données de protocole de commande d'accès au support MPDU, et le MPDU comprend une demande d'envoi d'une trame RTS ; et
si la trame RTS est envoyée par un premier point d'accès, et qu'une liaison sur laquelle opère le premier point d'accès n'appartient à aucune paire de liaisons NSTR d'un dispositif multi-liaison de point d'accès MLD AP auquel le premier point d'accès est affilié, la réinitialisation, par la première station dans le MLD non AP, d'une valeur de comptage du temporisateur de synchronisation de support à 0, dans lequel
le premier point d'accès est un point d'accès associé à la première station, ou le premier point d'accès est un autre point d'accès dans un ensemble de services de base multiple identifiant BSSID dans lequel se trouve le point d'accès associé à la première station.

2. Procédé selon la revendication 1, dans lequel le fait qu'une liaison sur laquelle opère le premier point d'accès n'appartient à aucune paire de liaisons NSTR d'un dispositif multi-liaison de point d'accès MLD AP auquel le premier point d'accès est affilié comprend :
le MLD AP auquel le premier point d'accès est affilié n'est pas un MLD AP mobile NSTR, et deux liaisons quelconques comprises dans le MLD AP mobile NSTR sont des liaisons NSTR.

3. Procédé selon la revendication 2, dans lequel le procédé comprend également :
si la trame RTS est envoyée par le premier point d'accès, et que le MLD AP auquel le premier point d'accès est affilié est le MLD AP mobile NSTR, une non-réinitialisation, par la première station dans le MLD non AP, de la valeur de comptage du temporisateur de synchronisation de support à 0.

4. Procédé selon la revendication 1, dans lequel le procédé comprend également :
si la trame RTS est envoyée par le premier point d'accès, et que la liaison sur laquelle opère le premier point d'accès appartient à une paire de liaisons NSTR du MLD AP à laquelle le premier point d'accès est affilié, une non-réinitialisation, par la première station dans le MLD non AP, de la valeur de comptage du temporisateur de synchronisation de support à 0.

5. Procédé de réglage de temporisateur de synchronisation de support, comprenant :
lorsque la transmission d'un second point d'accès dans un MLD AP se termine, le démarrage, par un premier point d'accès dans le MLD AP, d'un temporisateur de synchronisation de support et la définition d'une valeur initiale, dans lequel une paire de liaisons formée par une liaison sur laquelle opère le premier point d'accès et une liaison sur laquelle opère le second point d'accès est une paire de liaisons NSTR, et la valeur initiale n'est pas 0 ;
la réception, par le premier point d'accès dans le MLD AP, dans lequel le PPDU transporte un MPDU, et le MPDU comprend une trame RTS ; et
si la trame RTS est envoyée par une première station associée au premier point d'accès, et qu'une liaison sur laquelle opère la première station n'appartient à aucune paire de liaisons NSTR d'un MLD non AP auquel la première station est affiliée, la réinitialisation, par le premier point d'accès dans le MLD AP, d'une valeur de comptage du temporisateur de synchronisation de support à 0.

6. Procédé selon la revendication 5, dans lequel le procédé comprend également :
si la trame RTS est envoyée par une première station associée au premier point d'accès, et qu'une liaison sur laquelle opère la première station n'appartient à aucune paire de liaisons NSTR d'un MLD non AP auquel la première station est affiliée, la non-réinitialisation, par le premier point d'accès dans l'AP MLD, d'une valeur de comptage du temporisateur de synchronisation de support à 0.

7. Appareil de communication, comprenant :
une unité de traitement, configurée pour : lorsque la transmission d'une seconde station dans un MLD non AP se termine, démarrer un temporisateur de synchronisation de support et définir une valeur initiale, dans lequel une paire de liaisons formée par une liaison sur laquelle opère une première station et une liaison sur laquelle opère la seconde station est une paire de liaisons NSTR, et la valeur initiale n'est pas 0 ; et
une unité d'émission-réception, configurée pour recevoir un PPDU, dans lequel le PPDU transporte un MPDU, et le MPDU comprend une trame RTS, dans lequel
l'unité de traitement est également configurée pour : lorsque la trame RTS est envoyée par un premier point d'accès, et qu'une liaison sur laquelle opère le premier point d'accès n'appartient à aucune paire de liaisons NSTR d'un dispositif multi-liaison de point d'accès AP MLD auquel le premier point d'accès est affilié, réinitialiser une valeur de comptage du temporisateur de synchronisation de support à 0 ; et
le premier point d'accès est un point d'accès associé à la première station, ou le premier point d'accès est un autre point d'accès dans un ensemble de services de base multiple identifiant BSSID dans lequel se trouve le point d'accès associé à la première station.

8. Appareil de communication selon la revendication 7, dans lequel une liaison sur laquelle opère le premier point d'accès ne fait partie d'aucune paire de liaisons NSTR d'un dispositif de point d'accès multi-liaison MLD AP auquel le premier point d'accès est affilié comprend :
le MLD AP auquel le premier point d'accès est affilié n'est pas un MLD AP mobile NSTR, et deux liaisons quelconques comprises dans le MLD AP mobile NSTR sont des liaisons NSTR.

9. Appareil de communication selon la revendication 8, dans lequel l'unité de traitement est également configurée pour :
si la trame RTS est envoyée par le premier point d'accès, et le MLD AP auquel le premier point d'accès est affilié est le MLD AP mobile NSTR, ne pas réinitialiser la valeur de comptage du temporisateur de synchronisation de support à 0.

10. Appareil de communication selon la revendication 7, dans lequel l'unité de traitement est également configurée pour :
lorsque la trame RTS est envoyée par le premier point d'accès, et que la liaison sur laquelle opère la première station appartient à une paire de liaisons NSTR d'un MLD AP auquel le premier point d'accès est affilié, ne pas réinitialiser la valeur de comptage du temporisateur de synchronisation du support à 0.

11. Appareil de communication, comprenant :
une unité de traitement, configurée pour : lorsque la transmission d'un second point d'accès dans un MLD AP se termine, démarrer un temporisateur de synchronisation de support et décider d'une valeur initiale, dans lequel une paire de liaisons se forme par un lien sur lequel opère un premier point d'accès et un lien sur lequel opère le second point d'accès est une paire de liaisons NSTR, et la valeur initiale n'est pas 0 ; et
une unité d'émission-réception, configurée pour recevoir un PPDU, dans lequel le PPDU transporte un MPDU, et le MPDU comprend une trame RTS, dans lequel
l'unité de traitement est également configurée pour : si la trame RTS est envoyée par une première station associée au premier point d'accès, et qu'une liaison sur laquelle opère la première station n'appartient à aucune paire de liaisons NSTR d'un MLD non AP auquel la première station est affiliée, réinitialiser une valeur de comptage du temporisateur de synchronisation de support à 0.

12. Appareil de communication selon la revendication 11, dans lequel l'unité de traitement est également configurée pour :
quand la trame RTS est envoyée par une première station associée au premier point d'accès, et qu'une liaison sur laquelle opère la première station appartient à une paire de liaisons NSTR d'un MLD non AP auquel la première station est affiliée, ne pas réinitialiser la valeur de comptage du temporisateur de synchronisation de support à 0.

13. Appareil de communication, comprenant un processeur et un émetteur-récepteur, dans lequel l'émetteur-récepteur est configuré pour envoyer et recevoir des PPDU ; et quand le processeur exécute les instructions de programme, l'appareil de communication est activé pour réaliser le procédé selon l'une quelconque des revendications 1 à 6.

14. Support de stockage lisible par ordinateur, dans lequel le support de stockage lisible par ordinateur stocke des instructions de programme ; et lorsque les instructions de programme sont exécutées sur un ordinateur, l'ordinateur est activé pour réaliser le procédé selon l'une quelconque des revendications 1 à 6.

15. Produit de programme informatique comprenant des instructions de programme, dans lequel lorsque les instructions de programme sont exécutées sur un ordinateur, l'ordinateur est activé pour réaliser le procédé selon l'une quelconque des revendications 1 à 6.
